# FASCICULE DE BREVET EUROPEEN

(11) **EP 2 760 746 B1**
(45) Date de publication et mention de la délivrance du brevet: **09.12.2015**
(21) Numéro de dépôt: 12762657.0
(22) Date de dépôt: 28.09.2012
(51) Int. Cl.: B65B 21/06, B65B 21/24, B65G 47/08, B65D 71/06

(54) **PROCEDE D'ARRANGEMENT DE PACKS DE RECIPIENTS A SECTION TRANSVERSALE CIRCULAIRE OU OVOIDE, ET ENSEMBLE DE TELS PACKS**
VERFAHREN ZUM ANORDNEN VON PAKETEN MIT BEHÄLTERN MIT KREISFÖRMIGEM ODER OVALEM QUERSCHNITT UND GRUPPE VON DERARTIGEN PAKETEN
METHOD FOR ARRANGING PACKS OF CONTAINERS OF CIRCULAR OR OVAL CROSS SECTION, AND SET OF SUCH PACKS

(30) Priorité: 30.09.2011 FR 1158834
(43) Date de publication de la demande: 06.08.2014
(73) Titulaire: Gosset, François, 14100 Beuvillers (FR)
(72) Inventeur: Gosset, François, 14100 Beuvillers (FR)
(74) Mandataire: Blot, Philippe Robert Emile
(86) Numéro de dépôt international: PCT/EP2012/069267
(87) Numéro de publication internationale: WO 2013/045664

(56) Documents cités:
- DE-B- 1 131 137
- GB-A- 2 324 075
- US-A- 2 535 880

## Description

L'invention concerne le conditionnement des récipients à section transversale circulaire ou ovoïde, tels que des bouteilles en verre ou en matière plastique ou des cannettes métalliques ou des boîtes de conserves.

Les récipients de forme sensiblement cylindrique, en tout cas ceux présentant une section transversale circulaire ou plus ou moins ovoïde, tels que des bouteilles en verre ou en matière plastique ou des cannettes métalliques ou des boîtes de conserves, sont souvent expédiés aux clients par les usines de conditionnement sous forme de packs renfermant de multiples tels récipients, enveloppés dans un film en matière plastique. Ces packs comprennent souvent 6, 8, 12, 24 récipients ou davantage. Ces packs sont ensuite regroupés sur des palettes comprenant X couches de Y packs afin d'être plus facilement manipulables et transportables dans les chaines logistiques. Il existe plusieurs tailles de palettes, mais ces tailles dépendent de la chaine logistique utilisée, et non des caractéristiques des récipients à conditionner.

Le plus normalement, au sein du pack, les récipients sont disposés au contact les uns des autres en lignes et colonnes formant une matrice, c'est-à-dire avec des lignes et colonnes successives se faisant rigoureusement face. Dans un tel arrangement, les récipients ont au maximum 4 points de contact avec les récipients immédiatement voisins. Mais on conçoit aisément que plus le nombre de récipients est élevé, plus il est difficile de conserver une telle disposition « en matrice », car la stabilité du pack devient insuffisante.

Les récipients tendent à se mettre dans une disposition qu'on qualifiera dans la suite du texte de disposition « quinconcée », c'est à dire dans laquelle chaque ligne ou chaque colonne est décalée d'un demi-diamètre de récipient par rapport à la ligne ou à la colonne immédiatement voisine. Ce déplacement des récipients déforme le pack, et le film de plastique ne l'enveloppe plus que de manière lâche. Les récipients peuvent alors s'en échapper.

Une parade à ce problème consiste à disposer les récipients, avant leur enrobage par le film, sur une barquette présentant des rebords, ou sur une plaque, ce qui empêche plus ou moins les récipients de se déplacer. Le film enrobe à la fois les récipients et la plaque ou la barquette. Mais cette solution est coûteuse et complique le conditionnement des packs. Se pose également le problème du recyclage de la plaque ou de la barquette après le déballage du pack, car elle doit suivre une voie différente de celle suivie par le film plastique.

Ces inconvénients conduisent souvent à éviter de réaliser des packs contenant un grand nombre de récipients disposés en matrice.

Dans certains cas, on fait donc le choix de disposer les récipients selon des colonnes quinconcées, de manière délibérée, avant leur enrobage par le film. On obtient ainsi des packs qui, certes, n'ont pas un périmètre très régulier, mais le film plastique reste en contact avec tous les récipients situés à la périphérie du pack. L'expérience montre que les packs peuvent présenter, néanmoins, une rigidité suffisante, une fois enrobés, pour que leur transport puisse s'effectuer sans risques qu'un récipient ne s'échappe du pack. Pour cela, il suffit que le film enserre les récipients au contact duquel il se trouve avec suffisamment de pression. Cette pression est transmise par les récipients qui y sont soumis aux récipients avec lesquels ils sont en contact à travers les six points de contacts que chaque récipient possède avec ses voisins, et globalement le pack présente alors une rigidité adéquate, sans qu'il soit nécessaire de disposer les récipients sur une plaque ou une barquette.

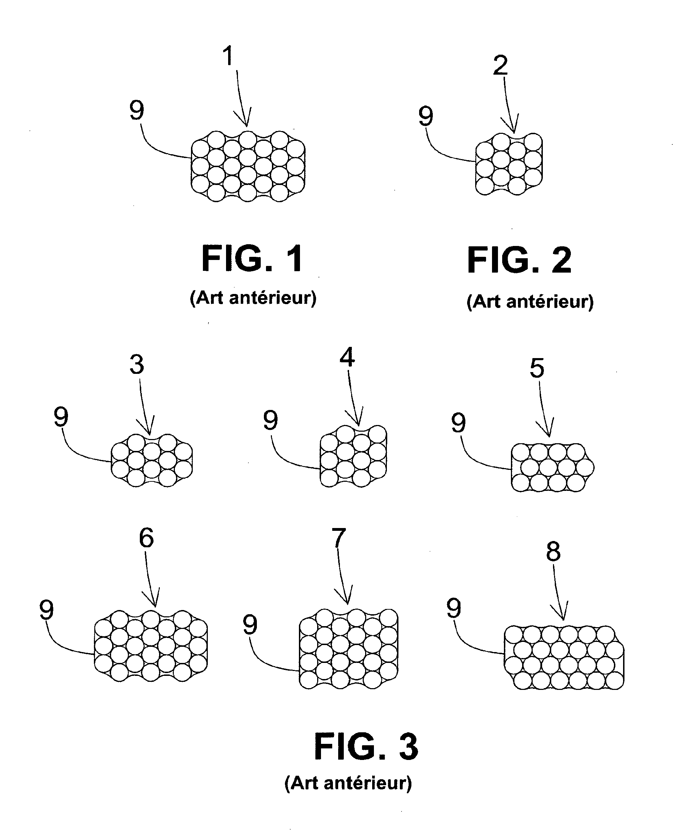

Par exemple, pour un pack de 24 récipients, une des dispositions optimales connues en termes de rigidité et d'encombrement du pack consiste à répartir les récipients en 7 colonnes successives et quinconcées de, respectivement, 3, 4, 3, 4, 3, 4, 3 récipients. La figure1 montre un exemple de telle disposition appliquée à un pack 1 de 24 récipients.

Par exemple, pour un pack 2 de 12 récipients, une des dispositions optimales connues en termes de rigidité et d'encombrement du pack consiste à répartir en 4 colonnes successives et quinconcées de 3 récipients, comme représenté sur la figure 2.

A la vue de ces deux arrangements de récipients, on comprend aisément qu'il existe différents arrangements possibles pour un même nombre de récipients constituant le pack. La figure 3 recense les arrangements quinconcés connus pour réaliser des packs 3-8 de 12 ou de 24 récipients.

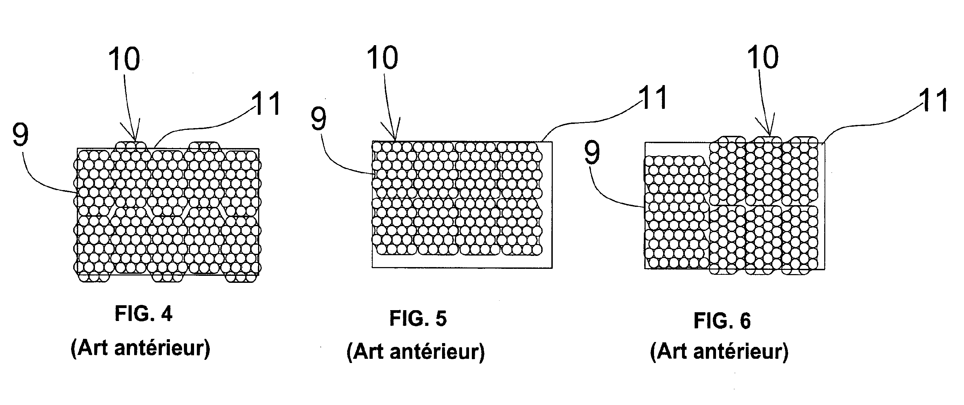

Il s'avère que les rigidités des packs 1-8 selon ces différents arrangements ne diffèrent pas de façon significative les unes des autres. Pour un nombre donné de récipients le choix de l'arrangement retenu se fera donc sur d'autres critères, qui sont entre autres, l'aspect du pack, la quantité de film 9 nécessaire pour l'emballer, la difficulté et le coût pour obtenir un tel arrangement par une machine de conditionnement, mais surtout la possibilité fournie par la forme du pack d'arranger lesdits packs 1-8 de façon optimale pour former une couche optimisée d'un ensemble de tels packs disposés sur une palette avant leur expédition. Cette optimisation de l'encombrement de la couche de packs a pour but de réduire au maximum les coûts de transport. La figure 4 montre, par exemple, des possibilités d'arrangement connues de couches de packs 10 de 24 récipients sur une palette 11, en fonction de la forme du pack. On se rend compte aisément que l'arrangement de la figure 4 (10 packs) est particulièrement compact, donc plus favorable que les arrangements des figures 5 (8 packs) et 6 (9 packs). Il n'est, cependant, pas possible de faire entièrement reposer les fonds de certains récipients sur la palette 11 sans devoir augmenter sensiblement l'aire de celle-ci par rapport à ce qui serait une aire optimale.

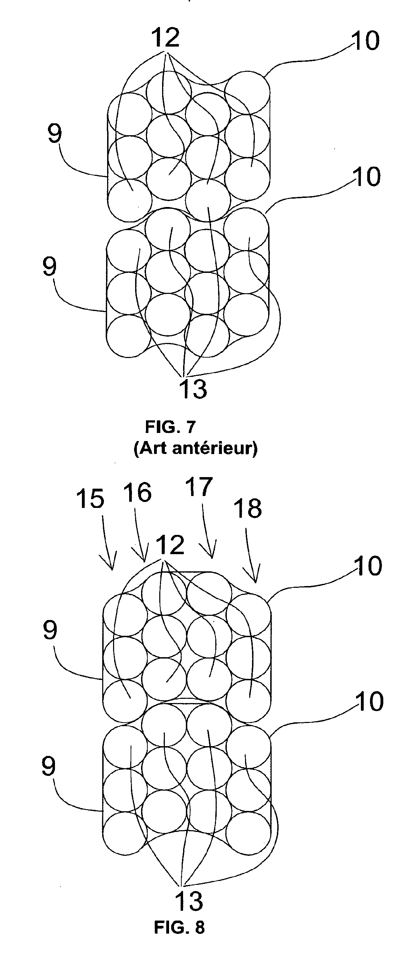

Comme on le voit sur les figures 4 à 6, il se peut que l'arrangement optimal des packs 10 sur la palette 11 nécessite de quinconcer également ces packs 10 entre eux. Dans d'autres cas, il se peut que l'arrangement optimal s'obtienne en imbriquant lesdits packs 10 « les uns derrières les autres » comme représenté sur la figure 7. Dans ces deux cas cependant, le quinconçage ou l'imbrication des packs ne peuvent pas être parfaitement réalisés, à cause des films 9 qui, même lorsqu'ils sont correctement rétreints, présentent une forme insuffisamment concave qui ne permet pas de mettre en contact tous les récipients 12, 13 des deux packs 10 qui se font face, ce qui pourrait réduire l'encombrement global des deux packs 10.

Dans certains cas, il serait souhaitable d'optimiser l'imbrication des packs pour augmenter le nombre de packs constituant une couche de palette.

Le but de l'invention est de procurer aux conditionneurs de récipients sensiblement cylindriques la possibilité de réaliser un arrangement suffisamment rigide des récipients permettant d'optimiser l'imbrication ou le quinconçage de plusieurs packs de récipients sur une couche de palette afin d'optimiser le nombre de packs contenus sur chaque couche de la palette.

A cet effet, l'invention a pour objet un procédé d'arrangement d'un pack de récipients à section transversale circulaire ou ovoïde selon un ensemble de lignes et de colonnes, les packs renfernant de multiples récipients enveloppés dans un film de matiére plastique, caractérisé en ce qu'on arrange lesdites colonnes dudit pack selon une alternance de colonnes voisines quinconcées ou non quinconcées par rapport à leurs colonnes voisines, au moins un ensemble d'au moins deux colonnes non quinconcées ayant ses deux colonnes voisines quinconcées par rapport à lui, l'arrangement étant tel que les récipients situés à la périphérie de deux packs successifs sont pratiquement en contact les uns avec les autres.

Suivant des modes de réalisation préférés, le procédé comporte une ou plusieurs des caractéristiques suivantes, prise(s) isolément ou suivant toute combinaison techniquement possible :
- l'arrangement est tel que les récipients situés à la périphérie de deux packs successifs sont en contact les uns avec les autres.
- les colonnes quinconcées ont le même nombre de récipients.
- les colonnes non quinconcées ont le même nombre de récipients.
- chaque colonne a le même nombre de récipients.
- ledit pack comporte douze récipients répartis en quatre colonnes de trois récipients, les deux colonnes centrales du pack étant non quinconcées et les deux colonnes latérales étant quinconcées par rapport aux colonnes centrales.

L'invention a également pour objet un ensemble de packs de récipients selon la revendication 7.

L'invention repose donc sur le principe d'une réduction de l'espace présent entre les récipients se faisant immédiatement face de deux packs voisins, espace qui est dû à la forme insuffisamment concave du film plastique enveloppant chaque pack.

Pour cela l'invention utilise une forme de pack alternant des colonnes quinconcées ou non quinconcées, une colonne quinconcée étant voisine d'au moins un ensemble d'au moins deux colonnes non quinconcées. Autrement dit, un ensemble d'au moins deux colonnes non quinconcées a ses deux colonnes voisines, ou sa colonne voisine s'il est situé à la périphérie du pack, quinconcées par rapport à lui.

Ce type d'arrangement sera appelé semi-quinconcé dans la suite du texte. L'invention sera mieux comprise à la lecture de la description qui suit, donnée en référence aux figures annexées suivantes :
- les figures 1 à 3 qui montrent des packs de récipients arrangés selon l'art antérieur de manière strictement quinconcée ;
- les figures 4 à 6 qui montrent des ensembles de packs strictement quinconcés, disposés selon l'art antérieur ;
- la figure 7 qui montre un ensemble de deux packs arrangés strictement quinconcés selon l'art antérieur et disposés sur une palette au contact l'un de l'autre ;
- la figure 8 qui montre un ensemble de deux packs arrangés selon l'invention et disposés sur une palette au contact l'un de l'autre ;
- la figure 9 qui montre un ensemble de douze packs selon l'invention disposés sur une palette ;
- la figure 10 qui montre un ensemble de douze packs selon l'art antérieur disposés sur une palette.

A titre illustratif, la figure 8 présente deux packs disposés chacun selon un arrangement de 12 récipients selon le principe de l'invention et mis au contact l'un de l'autre. D'autres nombres de récipients pourraient être envisagés.

Successivement, les colonnes voisines 15 et 16 sont quinconcées, les colonnes voisines 16 et 17 ne sont pas quinconcées et les colonnes voisines 17 et 18 sont quinconcées. Cet arrangement permet aux films thermo rétractables 9 de se rétracter de façon plus importante entre les récipients 12 et 13 situés à la périphérie de deux packs 10 successifs et étant proches les uns des autres, ce qui permet auxdits récipients 12, 13 d'être pratiquement en contact les uns avec les autres.

Dans ce cas l'imbrication des packs 10 est sensiblement optimisée par rapport à l'arrangement classique de la figure 7 où les récipients de chaque pack 10 sont disposés en colonnes purement quinconcées.

De préférence, pour améliorer encore cet effet, les récipients 12, 13 sont en contact les uns avec les autres.

Il s'avère que la rigidité du pack semi-quinconcé selon l'invention présente des caractéristiques de rigidité équivalentes à un pack quinconcé classique.

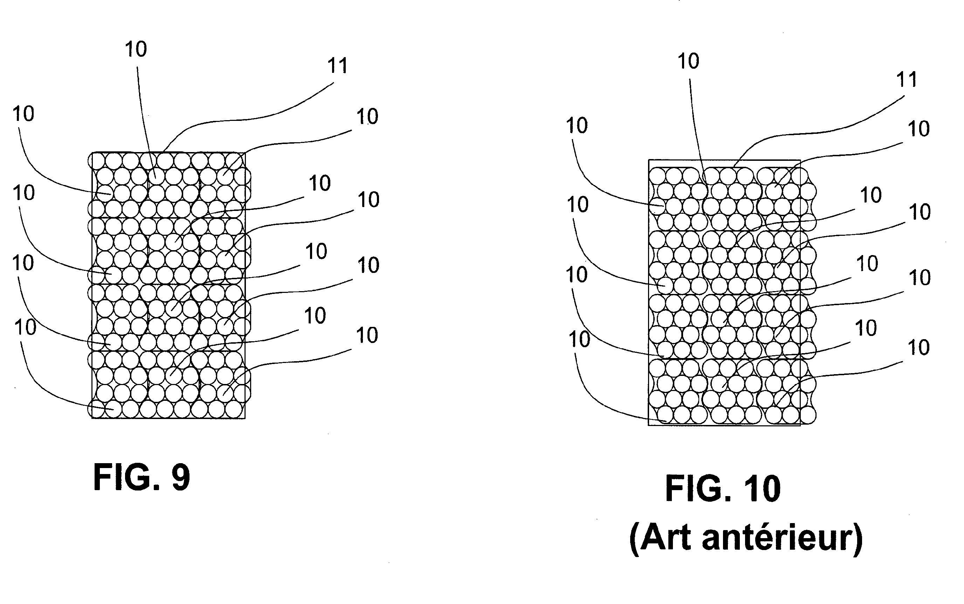

La figure 9 présente pour exemple, une optimisation du nombre de packs 10 de douze récipients disposés sur une palette 11 grâce à l'arrangement semi quinconcé de chacun des packs 10. L'imbrication des packs 10 totalement quinconcés représentée sur la figure 10 ne permet pas de mettre douze packs par couche sur une palette 11 identique à celle de la figure 9 à cause du débordement trop important en dehors de la palette 11 de plusieurs récipients. L'imbrication des packs semi-quinconcés selon l'invention permet de mettre douze packs par couche sur une palette 11 de dimensions aussi réduites que possible avec un léger débordement acceptable par les chaines logistiques.

Les exemples décrits et représentés montrent des exemples de packs selon l'invention qui comportent chacun un ou plusieurs ensembles de deux colonnes non quinconcées. Mais on peut prévoir qu'au moins un des ensembles de colonnes non quinconcées d'un pack comporte plus de deux telles colonnes, par exemple trois colonnes, l'essentiel étant que chaque groupe de colonnes non quinconcées soit séparé du ou des groupes non quinconcés le(s) plus proches(s) par une colonne quinconcée par rapport à lui.

Les packs semi-quinconcés selon l'invention peuvent être réalisés aisément selon les méthodes usitées actuellement pour quinconcer les packs dans les machines de conditionnement. Des documents décrivent des machines permettant d'ordonnancer les récipients d'un pack selon un schéma prédéterminé, notamment à l'aide de poussoirs qui peuvent décaler les colonnes de récipients les unes par rapport aux autres. Ces machines peuvent être aisément adaptées par l'homme du métier à la mise en oeuvre de la présente invention, en jouant notamment sur la forme des poussoirs. On pourra par exemple se reporter à WO-A-98/45186, US-A-2010/0012462 ou FR-A-1151821 pour trouver la description de telles machines.

Il est aisé de concevoir que ce principe peut être extrapolé pour toutes quantités de récipients regroupés en packs sous un film plastique thermorétractable.

## Revendications

1. Procédé d'arrangement d'au moins deux packs (10) de récipients à section transversale circulaire ou ovoïde selon un ensemble de lignes et de colonnes, les packs renfermant de multiples récipients, enveloppés dans un film en matière plastique, **caractérisé en ce qu'**on arrange lesdites colonnes de chaque pack selon une alternance de colonnes voisines quinconcées ou non quinconcées par rapport à leurs colonnes voisines, au moins un ensemble d'au moins deux colonnes voisines non quinconcées (16, 17) ayant ses deux colonnes voisines (15,18) quinconcées par rapport à lui, l'arrangement étant tel que les récipients (12, 13) situés à la périphérie de deux packs successifs sont pratiquement en contact les uns avec les autres.

2. Procédé selon la revendication 1, **caractérisé en ce que** l'arrangement est tel que les récipients (12, 13) situés à la périphérie sont en contact les uns avec les autres.

3. Procédé selon l'une des revendications 1 ou 2, **caractérisé en ce que** les colonnes quinconcées (15, 18) ont le même nombre de récipients.

4. Procédé selon l'une quelconque des revendications 1 à 3, **caractérisé en ce que** les colonnes non quinconcées (16, 17) ont le même nombre de récipients.

5. Procédé selon l'une quelconque des revendications 1 à 4, **caractérisé en ce que** chaque colonne (15, 16, 17, 18) a le même nombre de récipients.

6. Procédé selon l'une quelconque des revendications 1 à 5, **caractérisé en ce que** chaque pack comporte 12 récipients répartis en quatre colonnes de trois récipients, les deux colonnes centrales (16, 17) de chaque pack étant non quinconcées et les deux colonnes latérales (15,18) étant quinconcées par rapport aux colonnes centrales (16,17).

7. Ensemble de packs (10) de récipients à section transversale circulaire ou ovoïde déposés les uns à côté des autres de manière imbriquante, les packs renfermant de multiples récipients, enveloppés dans un film en matière plastique **caractérisé en ce que** lesdits packs (10) sont des packs (10) de récipients à section transversale circulaire ou ovoïde arrangés selon un ensemble de lignes et de colonnes par le procédé selon l'une quelconque des revendications 1 à 6.

## Patentansprüche

1. Verfahren zum Anordnen mindestens zweier Gebinde (10) aus Behältern mit rundem oder ovalem Querschnitt in einer Einheit aus Querreihen und Längsreihen, wobei die Gebinde, die mehrere Behälter in sich bergen, in eine Kunststofffolie eingehüllt werden, **dadurch gekennzeichnet, dass** die Längsreihen jedes Gebindes in einer abwechselnden Folge von benachbarten Längsreihen angeordnet werden, die in Bezug auf ihre benachbarten Längsreihen versetzt oder nicht versetzt sind, wobei mindestens eine Einheit mindestens zweier nicht versetzter, benachbarter Längsreihen (16, 17) ihre zwei versetzten benachbarten Längsreihen (15, 18) in Bezug auf sich versetzt hat, wobei die Anordnung dergestalt ist, dass die Behälter (12, 13) die sich am Umfang zweier aufeinander folgender Gebinde befinden, miteinander praktisch in Kontakt sind.

2. Verfahren nach Anspruch 1, **dadurch gekennzeichnet, dass** die Anordnung dergestalt ist, dass die Behälter (12, 13), die sich am Umfang befinden, miteinander in Kontakt sind.

3. Verfahren nach Anspruch 1 oder 2, **dadurch gekennzeichnet, dass** die versetzten Längsreihen (15, 18) dieselbe Anzahl an Behältern haben.

4. Verfahren nach einem der Ansprüche 1 bis 3, **dadurch gekennzeichnet, dass** die nicht versetzten Längsreihen (16, 17) dieselbe Anzahl an Behältern haben.

5. Verfahren nach einem der Ansprüche 1 bis 4, **dadurch gekennzeichnet, dass** jede Längsreihe (15, 16, 17, 18) dieselbe Anzahl an Behältern hat.

6. Verfahren nach einem der Ansprüche 1 bis 5, **dadurch gekennzeichnet, dass** jedes Gebinde 12 Behälter umfasst, die in vier Längsreihen zu je drei Längsreihen aufgeteilt sind, wobei die zwei mittleren Längsreihen (16, 17) jedes Gebindes nicht versetzt sind, und die zwei seitlichen Längsreihen (15, 18) in Bezug auf die mittleren Längsreihen (16, 17) versetzt sind.

7. Einheit von Gebinden (10) aus Behältern mit rundem oder ovalem Querschnitt, die seitlich ineinandergreifend abgelegt sind, wobei die Gebinde, die mehrere Behälter in sich bergen, in eine Kunststofffolie eingehüllt sind, **dadurch gekennzeichnet, dass** die Gebinde (10) Gebinde (10) aus Behältern mit rundem oder ovalem Querschnitt sind, die durch das Verfahren nach einem der Ansprüche 1 bis 6 in einer Einheit aus Querreihen und Längsreihen angeordnet werden.

## Claims

1. A method of arranging at least two packs (10) of containers of circular or oval cross section in a set of rows and columns said packs containing multiple containers, wrapped in a film in plastics, **characterized in that** said columns of said pack are arranged in an alternation of adjacent columns that are either staggered or not staggered with respect to their adjacent columns, at least one set of at least two non-staggered adjacent columns (16, 17) having its two adjacent columns (15, 18) staggered in relation to it, the arrangement being such that the containers (12, 13) situated at the periphery of the two successive packs are practically in contact with one another.

2. The method according to claim 1, **characterized in that** the arrangement is such that the containers (12, 13) situated at the periphery of two successive packs are in contact with one another.

3. The method according to one of claims 1 or 2, **characterized in that** the staggered columns (15, 18) have the same number of containers.

4. The method according to any one of claims 1 to 3, **characterized in that** the non-staggered columns (16, 17) have the same number of containers.

5. The method according to any one of claims 1 to 4, **characterized in that** each column (15, 16, 17, 18) has the same number of containers.

6. The method according to any one of claims 1 to 5, **characterized in that** each pack includes 12 containers distributed in four columns of three containers, the two central columns (16, 17) of the pack being non-staggered and the two lateral columns (15, 18) being staggered relative to the central columns (16, 17).

7. A set of packs (10) of containers of circular or oval cross section placed next to one another in an interlocking manner, **characterized in that** said packs (10) are packs (10) of containers of circular or oval cross section arranged in a set of rows and column using the method according to any one of claims 1 to 6.
